Europäisches Patentamt

European Patent Office

Office européen des brevets

(19)

(11) Numéro de publication : **0 444 976 A1**

(12)

# DEMANDE DE BREVET EUROPEEN

(21) Numéro de dépôt : **91400173.0**

(22) Date de dépôt : **25.01.91**

(51) Int. Cl.⁵ : **B01D 29/11,** B01D 29/64,
B01D 33/11, B01D 33/46,
B01D 29/82, B30B 9/12,
B30B 9/22, B01D 33/64

(30) Priorité : 31.01.90 FR 9001133
21.09.90 FR 9011653

(43) Date de publication de la demande :
04.09.91 Bulletin 91/36

(84) Etats contractants désignés :
CH DE ES FR IT LI

(71) Demandeur : PAIN CREATION
"Chez Michot"
F-16370 Saint Sulpice de Cognac (FR)

(72) Inventeur : Pain, Marcel
"Chez Michot"
F-16370 Saint Sulpice de Cognac (FR)

(74) Mandataire : CABINET BONNET-THIRION
95 Boulevard Beaumarchais
F-75003 Paris (FR)

(54) Appareil de pressurage.

(57)    L'appareil comporte autour d'un axe tubulaire perforé, un élément hélicoïdal de transport entouré d'une cage perforée, une membrane disposée de façon à diviser l'espace situé entre l'axe tubulaire et la cage, d'une part, en une chambre de pression en regard de l'axe tubulaire et, d'autre part, en une chambre de pressurage en regard de la cage, ladite chambre de pression étant reliée à un moyen adapté à commander la pression dans cette chambre de pression, ledit appareil comporte également des moyens d'entraînement en rotation adaptés à entraîner dans le même sens ladite cage d'une part et ledit moyen de transport d'autre part à des vitesses en rotation soit égales, auquel cas la membrane presse le produit contre la cage perforée, soit différentes, le produit progressant alors dans l'appareil.

EP 0 444 976 A1

Jouve, 18, rue Saint-Denis, 75001 PARIS

FIG.2

# APPAREIL DE PRESSURAGE

L'invention concerne un appareil de pressurage. Plus particulièrement cet appareil permet de séparer un produit en des phases liquides et solides.

Il est déjà connu, notamment par le brevet EP-A-0097894 (Josef Willmes GmbH) un appareil de pressurage comportant une vis sans fin munie d'une membrane, adaptée à tourner par rapport à une cage perforée fixe qui l'entoure. Un tel appareil permet lorsqu'un produit à presser est introduit dans la cage de faire avancer ce produit à l'intérieur de la cage grâce au filet de la vis sans fin. Lorsque la membrane fixée sur le filet de la vis est mise sous pression, celle-ci presse le produit contre la cage perforée, de sorte que la phase liquide du produit est exprimée et recueillie à l'extérieur de la cage perforée, tandis que la phase solide reste dans la cage perforée et est ensuite évacuée vers l'extérieur de celle-ci par la vis sans fin.

Un tel appareil présente cependant de nombreux inconvénients, notamment le fait que le produit à presser se répartit mal à l'intérieur de la cage perforée. En effet par gravité le produit a tendance à s'accumuler dans le bas de la cage perforée, tandis que la partie haute reste vide.

De ce fait l'avance du produit à l'intérieur de la cage perforée, poussé par le filet de la vis sans fin s'effectue très mal.

En outre, lorsque la membrane est mise sous pression, pour presser ledit produit, elle n'arrive pas à exercer sur ce produit une pression continue et homogène. En effet, en partie haute de la cuve, la membrane contacte directement la cuve sans rien presser du tout, et en partie basse de la cuve la quantité de produit accumulé entraîne une impossibilité pour la membrane de presser correctement ce produit. En conclusion non seulement le produit avance mal et ne se répartit pas de façon homogène mais en plus le pressage est insuffisant. Pour pallier cet inconvénient on est contraint de multiplier le nombre de spires de pressage et, par conséquent, d'augmenter la longueur de l'appareil. D'autres inconvénients, non moins importants nuisent au bon fonctionnement des appareils déjà connus. Notamment les appareils connus présentent une accessibilité difficile en ce qui concerne les organes essentiels, à savoir : la vis, la membrane et la cage. De ce fait, le montage et le démontage de l'ensemble de ces éléments, et notamment de la membrane, est malaisé.

Ces difficultés impliquent que l'entretien d'un tel appareil n'est pas facile, et est très souvent déficient.

En outre la cage perforée qui permet l'écoulement des parties liquides, présente en raison de sa difficulté d'entretien, des perforations de fortes largeurs pour permettre le passage aisé des liquides extraits. On cherche à éviter ainsi le colmatage des perforations de la cage.

Cependant, il est nécessaire de placer en aval de cette cage des dispositifs de filtration pour filtrer les liquides extraits.

Il en résulte un dispersement et une multiplication des pièces à entretenir.

La présente invention a notamment pour but de pallier l'ensemble de ces inconvénients en créant un appareil dans lequel l'avance et la répartition du produit soient homogènes et dans lequel la qualité du pressage soit satisfaisante. On cherche également à travailler plus rapidement, notamment en réduisant le nombre de pressées et le temps de passage du produit à presser dans l'appareil.

La présente invention a encore pour but de faciliter l'accès aux pièces essentielles de ce type d'appareil de pressurage. Notamment, la présente invention vise à permettre un entretien aisé de la membrane, de la vis et de la cage perforée. En outre, la présente invention a pour but, tout en permettant une meilleure accessibilité à la cage, d'obtenir une filtration des liquides extraits.

A cet effet, la présente invention concerne un appareil de pressurage pour séparer un produit en des phases liquide et solide, comportant, autour d'un axe tubulaire perforé, un élément hélicoïdal de transport entouré d'une cage perforée, une membrane disposée de façon à diviser l'espace situé entre l'axe tubulaire et la cage, d'une part, en une chambre de pression en regard de l'axe tubulaire et, d'autre part, en une chambre de pressurage en regard de la cage, ladite chambre de pression étant reliée à un moyen adapté à commander la pression dans cette chambre de pression. Ledit appareil comportant également des moyens d'entraînement en rotation, caractérisé en ce que lesdits moyens d'entraînement en rotation sont adaptés à entraîner dans le même sens ladite cage d'une part et ledit moyen de transport d'autre part à des vitesses en rotation soit égales, soit différentes.

Selon des caractéristiques préférées, on établit dans la chambre de pression une pression positive lorsque les vitesses de rotation de la cage et de l'élément de transport sont égales et une pression négative ou nulle lorsque les vitesses de rotation de la cage et de l'élément de transport sont différentes.

Il est donc possible de faire se dérouler à des moments distincts, d'une part, la progression du produit dans l'appareil (lorsque les vitesses sont égales), et d'autre part, son pressurage sous l'action de la membrane (lorsque les vitesses sont égales) on permet à chacune de ces opérations de se réaliser dans de meilleures conditions, sans que l'une soit gênée par l'autre.

Ainsi d'autres caractéristiques préférées, l'appareil comporte des moyens pour fonctionner suivant une séquence répétitive avec, en alternance, une étape dans laquelle les vitesses de rotation de la cage et de l'élément de transport sont différentes et une étape dans laquelle elles sont égales.

Selon un mode de réalisation préféré, l'appareil comporte des moyens pour réduire à un minimum le volume de la chambre de pression, ces moyens agissant par exemple par élasticité et/ou par mise en dépression de la chambre de pression.

On minimise ainsi la gêne qu'introduit la membrane à la progression du produit et des parties solides dans le creux du filet.

Selon une autre caractéristique importante de l'invention l'appareil est divisé en deux parties comprenant respectivement la cage perforée, d'une part, et l'élément de transport hélicoïdal, d'autre part, ces deux parties étant adaptées à se séparées l'une de l'autre par un moyen de dissociation par déplacement relatif en sens axial.

Ainsi, il est facile d'une part de placer ou de déplacer la membrane et d'autre part, toute intervention d'entretien ou de réparation notamment sur l'élément de transport peut être effectuée aisément.

En raison de l'utilisation de la force centrifuge pour évacuer les liquides à travers la cage perforée, il est possible de réaliser les perforations de la cage de manière beaucoup plus fines et performantes que celles effectuées jusqu'à présent de sorte qu'une filtration des liquides extraits est possible. De plus, grâce à l'utilisation de la force centrifuge, le produit ne peut être refoulé dans le conduit d'admission.

D'autres objets caractéristiques et avantages de l'invention ressortiront d'ailleurs de la description qui va suivre, donnée à titre d'exemple en référence aux dessins annexés dans lesquels :

- la figure 1 est une vue schématique montrant pressurage selon l'invention ou position ouverte pour l'entretien ;
- la figure 2 est une vue schématique en coupe longitudinale montrant l'appareil selon l'invention ;
- la figure 3 est une vue en élévation latérale d'une cage perforée connue ;
- la figure 4 est une vue en élévation latérale d'une cage perforée selon l'invention ;
- la figure 5 est un agrandissement du détail référencé V à la figure 2;
- la figure 6 est une vue en coupe transversale de la vis montrant le moyen de fixation de la membrane sur la vis, au départ de la membrane ;
- la figure 7 est une vue en coupe selon la ligne VII-VII de la figure 6 ;
- la figure 8 est une vue en coupe longitudinale d'un appareil de pressurage selon une première variante de l'invention ;
- la figure 9 est une vue en coupe longitudinale d'un appareil de pressurage selon une seconde variante de l'invention ;

- la figure 10 illustre schématiquement un circuit électrique dont est muni l'appareil selon l'invention ;
- la figure 11 est une vue schématique en coupe d'une variante de réalisation d'un appareil conforme à l'invention dans laquelle l'appareil est vertical ;
- la figure 12 est une vue en perspective montrant la vis sans fin dont est muni l'appareil de la figure 11, et
- les figures 13 et 14 sont des coupes schématiques partielles montrant en section le creux du filet d'une vis sans fin munie d'une variante de membrane, le volume de la chambre de pression étant réduit à zéro sur la figure 13 tandis qu'il est maximal sur la figure 14 ;
- les figures 15 à 17 sont des vues schématiques en coupe, en trois situations différentes, d'un exemple de réalisation de vis sans fin équipée d'une membrane en matériau toilé .

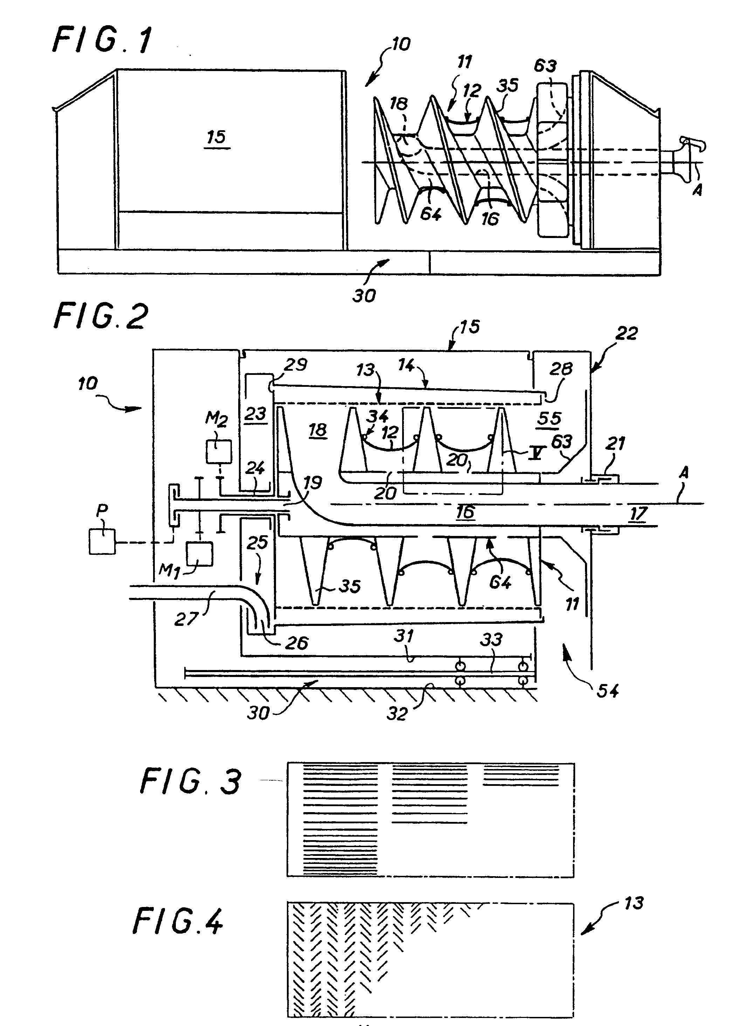

Selon la forme de réalisation représentée aux figures 1 à 7, l'appareil de pressurage 10, selon l'invention comporte notamment : une vis sans fin 11 munie d'une membrane 12 située sur la vis entre les arêtes d'un filet hélicoïdal 35 de cette vis, une cage perforée 13, un carter de réception des jus 14 et un carter externe de protection 15.

La vis 11 (figure 2) présente un conduit interne 16 dont une première extrémité 17 débouche en tête de vis dans un conduit d'alimentation en produit à traiter et une seconde extrémité 18 débouche dans le creux de la dernière spire du filet de la vis.

Cette vis 11 est adaptée à être entraînée en rotation par rapport à un axe A généralement horizontal (sur les figures 1 et 2), grâce à un moteur M1 auquel elle est reliée par l'intermédiaire d'un arbre à embout cannelé 19 sur lequel elle est emboîtée.

L'arbre de la vis 11 présente une forme tutulaire avec des orifices 20 situés dans le creux du filet de la vis. Ces orifices sont placés en communication avec une pompe P par un réseau de canalisations (non détaillées) et par l'intermédiaire de l'intérieur de l'arbre cannelé 19.

La tête de la vis 11 est liée via un arbre creux à ailettes 63 et un palier tournant 21 à un couvercle 22 adapté à refermer le carter de protection externe 15.

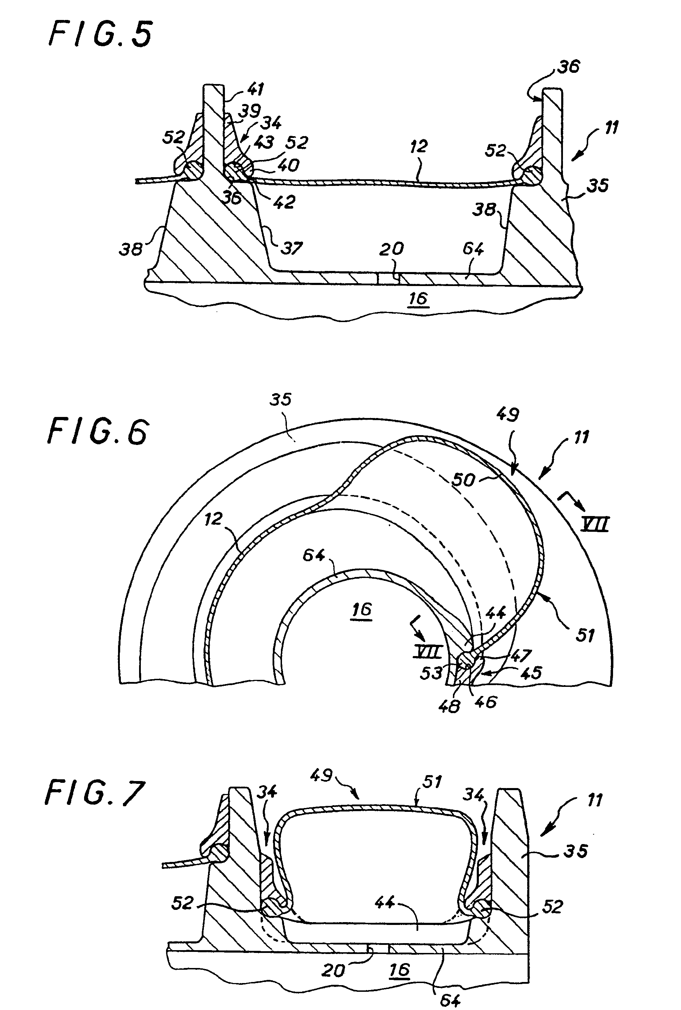

La membrane 12 est fixée sur le filet de la vis par des dispositifs de fixation 34 et 45 plus particulièrement représentés aux figures 5 à 7 et dont la description sera faite plus loin.

La vis 11 est entourée de manière ajustée, par la cage perforée 13.

Cette cage présente une forme cylindrique complètement ouverte à l'une de ses extrémités 55 et est reliée à un plateau tournant 23 à son autre extrémité. Ce plateau tournant 23 est entraîné en rotation par un moteur M2 grâce à un palier tournant 24 auquel il est relié. Le plateau tournant 23 comporte une chambre 25 à son intérieur, dans laquelle plonge la première extrémité 26 d'une conduite d'évacuation 27, tandis que la seconde extrémité de cette conduite ressort du carter de protection externe 15.

Le carter 14 de réception des jus, est solidarisé à la cage perforée 13 par l'intermédiaire du plateau tournant 23. Ce carter 14 a une forme tronconique, évasée en direction du plateau tournant 23. L'extrémité 55 de la cage perforée 13 est liée par un joint d'étanchéité 28 au carter de réception des jus. Des orifices annulaires 29 sont ménagés autour du plateau tournant 23, à la jonction de celui-ci avec le carter de réception des jus 14.

Le carter externe de protection 15 est muni à sa partie inférieure (figure 2) d'un guide de coulissement 30. Ce guide est un caisson parallélépipèdique dont les parois hautes 31 et basses 32 sont munies de galets supérieurs et inférieurs.

Un rail 33 solidaire du couvercle 22 est adapté à être introduit entre les galets supérieurs et inférieurs pour coulissement à l'intérieur du guide 30 à l'aide de moyens de manoeuvre et de blocage (non détaillés).

En référence aux figures 3 et 4, la cage perforée 13 est maintenant décrite.

De manière connue les cages perforées existantes sont telles que représentées à la figure 3. Ce type de cage présente des perforations longitudinales d'environ 0,03 m à 1 mètre de long séparées par des zones non perforées de l'ordre de 0,05 m à 0,1 mètre. La largeur de telles perforations est typiquement de l'ordre de 2 mm et leur surface représente 0,5 à 3% de la surface totale de la cage perforée.

La cage 13 selon l'invention, est munie, quant à elle, de micro-perforations dont la longueur est de l'ordre de 0,01m à 0,05m et la largeur réduite à une fraction de millimètre (par exemple 20μm à 800μm selon le produit à traiter). Ces perforations très fines se répartissent sur l'ensemble de la surface de la cage perforée. La surface de l'ensemble de ces perforations est de l'ordre de 3 à 10%, de la surface totale de la cage, donc de plusieurs fois supérieure à celle des perforations de la technique antérieure. On obtient ainsi un bon taux d'égouttage tout en assurant un filtrage efficace grâce à la finesse des perforations.

En référence aux figures 5 à 7, il est décrit un premier exemple de dispositifs de fixation 34 et 45 de la membrane à la vis 11.

La membrane se présente sous la forme d'un ruban en matière élastique souple du type caoutchouc, ayant deux bourrelets latéraux 52 et deux bourrelets transversaux 53 à chacune de ses extrémités.

Le filet hélicoïdal 35 de la vis 11 est muni d'un méplat 36 sur chacune de ses faces inclinées 37-38.

Le dispositif de fixation 34 se présente sous la forme d'un rail longiligne en forme de L ayant une aile de fixation 39 et une aile de maintien 40. L'aile de fixation 39 est en contact avec la partie verticale 41 du méplat 36 réalisé dans le filet, et l'aile de maintien 40 fait face, sans contact à la partie horizontale 42 de ce même méplat. Les termes "vertical" et "horizontal" utilisés ici ne le sont qu'à titre de simplification de la description et en référence aux figures 5 à 7. Il va de soi que si la vis 11 est verticale, la direction des deux parties 41 et 42 est inversée.

L'aile de maintien 40 présente un évidement 43 sur toute sa longueur.

L'aile de fixation 39 est solidarisée par tout moyen adéquat à la partie verticale 41 du méplat. Dans la forme de réalisation considérée cette fixation est réalisée par des vis (non représentées).

Dans la zone de départ de la membrane, celle-ci doit être fixée au filet de la vis non seulement par ses côtés, mais également par sa partie transversale finale. Cette partie transversale présente un bourrelet 44. Un dispositif de fixation transversal 45 comportant un évidement 46 est fixé à l'âme centrale de la vis 11. Ce dispositif comporte une aile de maintien 47 et une aile de fixation 48.

La partie extrêmale 49 de la membrane 12 est entoilée. La toile 50 (figure 6) est intégrée à la membrane 12 et lui confère une forme de renflement 51 destinée à être la position extrême de la membrane lorsque celle-ci est sous pression.

Comme on le voit à la figure 7, la membrane qui est à son départ plaquée, contre le fond du filet de la vis par le dispositif de fixation transversal 45, s'élève rapidement le long du filet pour être fixée à mi-hauteur de celui-ci en dehors de la zone extrêmale (figure 5).

Le montage et le fonctionnement de l'appareil selon l'invention sont décrits ci-après.

Dans un premier temps, la membrane est fixée sur le filet de la vis 11.

Le montage de cette membrane s'effectue par la mise en place de ses bourrelets latéraux et transversaux dans les évidements 43 et 46 des ailes de maintien 40 et 47 des dispositifs de fixation 34 et 45. Les dispositifs de fixation 34 et 45 sont alors solidarisés respectivement au filet de la vis et à l'âme de la vis par leur ailes de fixation 39 et 48.

La vis 11 ainsi munie de sa membrane 12 sur au moins une partie de sa longueur est placée à l'intérieur de la cage perforée 13. Ce faisant le rail de guidage 33 coulisse à l'intérieur du guide de coulissement 30 entre les galets inférieurs et supérieurs. Au terme de l'enfoncement de la vis 11 dans la cage perforée 13, l'arbre de la vis s'emboîte sur l'extrémité cannelée de l'arbre 19. Dès lors (figure 2), la mise en marche du moteur M1 entraîne la rotation de l'arbre 19 et de la vis 11.

Le couvercle 22 est alors en place sur le carter externe de protection 15.

La mise en marche du second moteur M2 entraîne la rotation solidaire de la cage perforée 13 et du carter de réception des jus 14.

Les deux moteurs entraînent respectivement la vis et la cage à des vitesses identiques et dans le même sens, par exemple de 150 à 350 tours/minute. La pompe P est alors mise en marche de sorte à créer une dépression entre la membrane et la vis. De ce fait, la membrane se colle au fond du filet et offre un large passage au produit à traiter. Au moment souhaité on établit une légère différence entre les deux vitesses, de façon à créer entre vis et cage un déphasage ou glissement de l'ordre de 3 à 5 tours/minute.

Le produit à traiter pénètre par l'ouverture 17 à l'intérieur de la conduite 16. Il ressort à l'extrémité 18 de ce conduit dans la cage perforée 13. Le produit soumis à une force de centrifugation est réparti de façon homogène à l'intérieur de la cage. La rotation de la vis, grâce au déphasage de vitesse ci-dessus indiqué, permet l'avancée du produit dans la cage perforée. Les vitesses de la vis et de la cage sont ensuite synchronisées. Le produit est alors pressé de manière connue en soi, de sorte que le liquide qu'il contient est exprimé et passe à travers les perforations de la cage perforée. Etant donné que les perforations de cette cage sont très fines seule la partie la plus fluide du produit peut passer à travers la cage. On réalise ainsi une filtration du produit.

On remarquera que la vitesse élevée de rotation de la cage perforée permet la centrifugation du produit à traiter et donc, outre une meilleure répartition du produit à traiter sur toute la périphérie de la cage perforée, permet également un meilleur pressage.

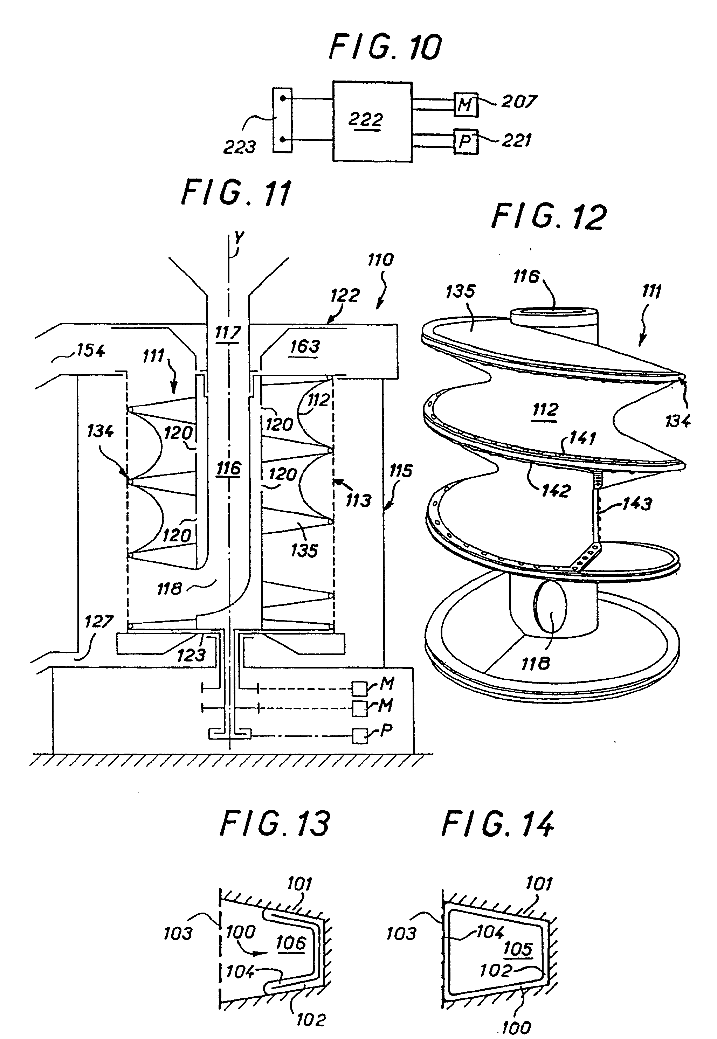

Dans le cas où les produits à traiter progressent difficilement dans le creux de la vis, on a prévu des moyens montrés à la figure 10 pour que l'appareil fonctionne suivant une séquence répétitive comportant une première étape dans laquelle la vis 11, 11' tourne par rapport à la cage 13, 13' alors que la membrane 12, 12' n'exerce pas d'action de pressurage, et une deuxième étape dans laquelle la vis 11, 11' est fixe par rapport à la cage tandis que la membrane 12, 12' presse le produit se trouvant dans la chambre de pressurage.

Ces moyens comportent dans un ensemble 222 (figure 10), des moyens électriques ou électroniques bien connus de l'homme du métier, qui sont connectés à une source électrique 223, à la pompe 221 et au moteur 207, et qui prennent une première configuration dans laquelle le moteur 207 est alimenté tandis que la pompe 221 ne l'est pas et une deuxième configuration dans laquelle le moteur 207 n'est pas alimenté tandis que la pompe 221 est alimentée, et ainsi de suite.

La durée des première et deuxième étapes est réglée en fonction des circonstances pour optimiser de la façon voulue la séparation entre les parties solides et liquides.

Pour régler la durée des première et deuxième étapes, l'ensemble 222 comporte simplement des temporisations réglables, mais dans une variante plus élaborée il est remplacé par un ensemble prévu pour être relié en outre à un capteur de la pression fournie par la pompe 221 et à un compteur de la rotation effectuée par le moteur 207, le passage de la première à la deuxième étape se faisant quand le moteur 207 a effectué un nombre de tours prédéterminé, et le passage de la deuxième à la première étape quand la pompe 221 fournie une pression prédéterminée.

On réalise ainsi un meilleur pressage du produit à traiter. Les jus extraits du produit et filtrés grâce aux perforations de la cage elle-même sont recueillis par le carter de réception. Comme ce carter de réception 14 tourne à la même vitesse que la cage perforée, les gouttes de jus extraites ont tendance à venir s'écouler le long de la paroi du carter de récipient 14 sans éclater au contact de cette paroi. De ce fait on évite une oxydation des jus extraits. Ces jus pénètrent ensuite par l'orifice annulaire 29, dans la chambre 25 du plateau tournant. Ils sont enfin évacués à l'extérieur du carter externe 15 par la conduite 27.

Le résidu solide du produit à traiter continue, quant à lui, sa progression le long du filet de la vis 11 et est ensuite évacué du couvercle 22 par l'orifice de sortie 54.

Il est à noter que la forme tronconique du carter de réception des jus 14 permet avantageusement de faciliter la collection des jus extraits.

L'appareil selon une autre caractéristique de l'invention, peut se démonter facilement par coulissement de la vis en dehors de la cage perforée. Cette dernière devient également très accessible ce qui permet son entretien régulier.

Il est à noter que les moyens de coulissement décrits sont constitués de galets coopérant avec un rail. Il peuvent cependant être autres. Par exemple un système de vérin hydraulique peut, sur commande, réaliser la sortie de la vis 11 et son guidage : on peut aussi mettre en oeuvre un système à vis et écrou ou à crémaillère et pignon pour réaliser cette manoeuvre.

De même les moyens de fixation 34 et 35 décrits peuvent être de toutes formes et dimensions de sorte à permettre le pincement de la membrane 12 contre le filet ou le creux de la vis 11. D'autres variantes de fixation et de positionnement de la membrane sur le filet seront décrites par la suite.

Les perforations de la cage perforée 13 décrites en référence à la figure 4 peuvent présenter d'autres formes et dimensions que celle représentée, l'important étant ici de réaliser des perforations de très faible largeur, de préférence à l'aide d'un dispositif laser. Ces perforations doivent, en outre, couvrir le plus possible de surface de la cage perforée 13. Ainsi tout en diminuant la largeur des perforations on augmente la surface d'égouttage de la cage et ceci dans des proportions non négligeables.

Selon la taille des particules à retenir, l'appareil de pressurage selon l'invention, est muni d'une cage avec des perforations adaptées. La cage perforée est facilement démontable du plateau tournant auquel elle est reliée par un élément de serrage (non représenté) par exemple une bride de serrage.

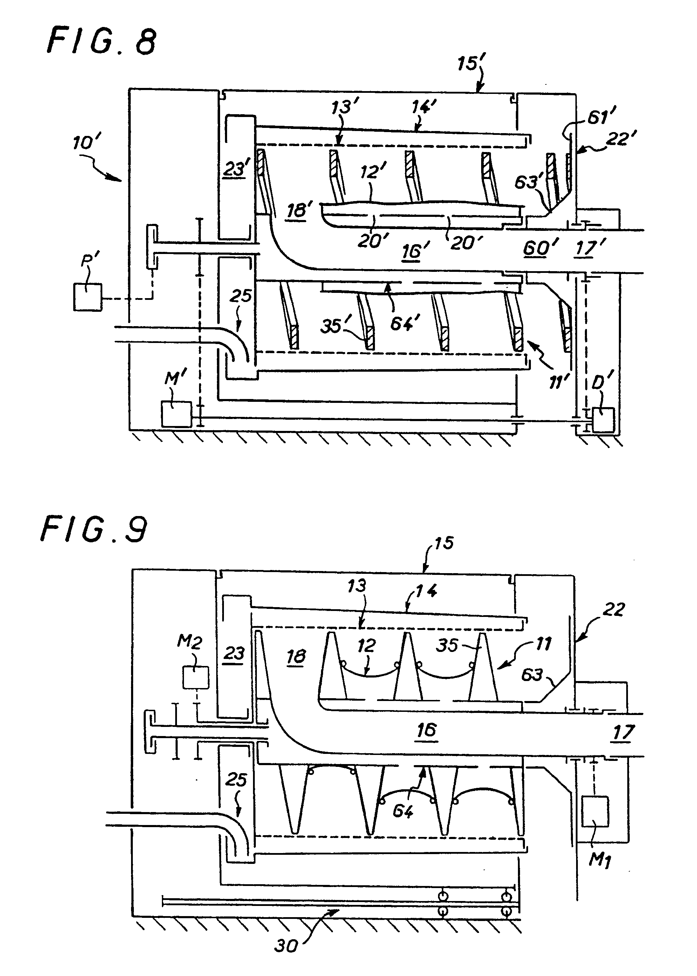

La figure 9 illustre une variante du mode de réalisation représenté à la figure 2. Dans cette variante les moteurs M1 et M2 sont placés non pas côte à côte d'un même côté de l'arbre de vis, mais à chaque extrémité de cet arbre. Un moteur M2 est prévu pour l'entraînement du plateau tournant 23, à proximité de ce plateau. Un moteur M1 d'entraînement en rotation de la vis 11 est prévu dans le couvercle 22 de l'appareil de pressurage.

Une telle disposition facilite l'accès à chacun de ces moteurs.

Bien entendu, la présente invention n'est pas limitée aux formes de réalisation décrites et représentées ci-dessus. Notamment l'appareil de pressurage selon l'invention peut être horizontal ou vertical. Le carter 14 de récupération des jus peut être constitué par une succession de parties tronconiques ou cylindriques munies chacune d'un moyen de réception de jus en forme de chambre ou d'auget de récupération semblable à la chambre 25, ces chambres se succédant le long de l'appareil de façon à récupérer les jus séparés à différents stades du pressurage un conduit d'évacuation 26-27 étant associé à chacune d'elles.

Une première variante de réalisation est représentée à la figure 8.

Dans cette variante la vis 11 décrite au premier mode de réalisation est remplacée par un arbre lisse 64' associé à un filet hélicoïdal 35'. Cet arbre 64' est évidé et comporte un conduit 16' dont une première extrémité 17' est associée de façon amovible à un arbre intermédiaire fixe 60' solidaire du couvercle 22'. La seconde extrémité de cet arbre 64' est directement liée au plateau tournant 23' pour rotation avec lui. Cette rotation est effectuée grâce à un moteur M'. La membrane 12' est emmanchée sur l'arbre 64' et fixée à celui-ci à ses deux extrémités. Des orifices 20' d'un réseau de canalisations internes sont prévus tout au long de l'arbre 64'. Ces canalisations internes (non représentées) sont reliées à une pompe P' comme dans l'exemple précédemment décrit.

Un filet hélicoïdal 35', complètement indépendant de l'arbre 64' est solidaire d'un plateau tournant 61' situé sous le couvercle 22'. Ce plateau tournant 61' est entraîné en rotation par le moteur M' et un dispositif de déphasage angulaire D'.

La cage perforée 13' est entraînée en rotation de façon solidaire avec l'arbre de vis 64'. Comme précédemment un carter de réception des jus 14' est solidaire du plateau tournant 23' et est entraîné en rotation avec l'arbre de vis 64' et la cage perforée 13'. L'ensemble des autres dispositifs décrits dans le premier mode de réalisation est repris.

Le fonctionnement d'un tel appareil est décrit ci-après.

Le produit à traiter pénètre à l'intérieur de l'arbre intermédiaire 60' traversant l'arbre de vis 64' pour déboucher en 18' dans la cage perforée 13'.

L'arbre de vis 64', muni de sa membrane 12', la cage perforée 13' et le carter de réception 14' sont entraînés en rotation par le moteur M' et le filet hélicoïdal 35' est, quant à lui, entraîné à partir de ce même moteur par l'intermédiaire du déphaseur D'. Le fonctionnement reste le même que dans le premier mode de réalisation et on retrouve les mêmes avantages. L'intérêt de cette variante réside dans le fait que la fixation de la membrane sur l'arbre de vis 64' est aisée. En outre la sortie du filet hélicoïdal 35' permet un nettoyage aisé de celui-ci, ainsi qu'un bon entretien de la membrane 12'.

Il est à noter que le filet hélicoïdal 35' constitue à lui seul l'élément 11' de transport du produit à traiter.

On remarquera que dans un tel appareil on dissocie l'élément de transport du produit à traiter (à savoir le filet hélicoïdal 35') de l'élément de pression (à savoir la membrane 12'). On améliore ainsi à la fois la fonction de transport et la fonction de pression. En outre, dans le présent mode de réalisation, la membrane est entraînée en rotation à la même vitesse que la cage perforée 13'. Il est à noter que dans ce mode de réalisation l'entraînement du plateau tournant 23' et du filet hélicoïdal 35' se fait par deux côtés opposés. Cet entraînement pourrait, sans difficulté, être réalisé d'un même côté, ou par deux moteurs séparés. Ceci sans emploi du dispositif de déphasage angulaire.

Dans la nouvelle variante représentée à la figure 11, l'appareil de pressurage est vertical et non horizontal ; la disposition de l'appareil 110 autour de l'axe vertical Y permet d'utiliser la gravité pour faire progresser le produit dans l'arbre creux 117 et le conduit 116.

Comme on le voit plus précisément sur la figure 12, l'arête périphérique de la vis 111 est munie d'un joint 134 qui favorise la coopération entre la vis et la cage. Les bords de la membrane sont enserrés de façon étanche entre le plein du filet 135 et une bande périphérique supérieure 141, d'une part et une bande périphérique inférieure 142, d'autre part. Chacune des extrémités de la membrane est fixée de son côté au moyen d'un étrier tel que visible en 143 avec un tronçon central boulonné sur le plein du filet et deux branches latérales qui viennent rejoindre les bandes 141, 142 respectives de fixation des bords.

La fixation de la membrane 112 à la périphérie du plein du filet est avantageuse car elle permet à la membrane de ne presser le produit que contre la cage 113.

Dans la variante qu'illustrent les figures 13 et 14, on a remplacé la membrane 112 par la portion mobile 104 d'un tube souple 100 rapporté au fond du filet d'une vis 101, par exemple par collage. En section, la portion 102 par laquelle le tube 100 est rapporté sur le plein du filet, a une forme en U et une longueur égale à la moitié du périmètre du tube, ce périmètre correspondant à la longueur qu'a en section le pourtour du creux de la vis (voir figure 14), qui est limité latéralement par le plein du filet et la cage 103.

La portion mobile 104 qui forme membrane peut ainsi se loger exactement contre la portion 102, lorsque comme montré sur la figure 13 on réduit à un minimum le volume de la chambre de pression, qui correspond à l'intérieur 105 du tube 100, c'est-à-dire que, comme pour les membranes 12 et 112, la chambre de pression se trouve du côté de la membrane en regard du fond du filet, alors que la chambre de pressurage se trouve du côté en regard de la cage.

Pour relier la pompe à la chambre de pression 105, on peut utiliser un conduit disposé au centre de la vis, de façon similaire aux conduits 16 et 116, ou bien relier le bout du tube 100 le plus éloigné de la sortie de la cage, à un conduit qui passe à fond de filet, et qu'on relie par un joint tournant à la pompe.

On notera que cette dernière solution permet d'éviter de ménager un conduit central dans la vis sans fin, et permet par conséquent de disposer une membrane sur une vis sans fin classique.

Pour réduire à un minimum le volume de la chambre de pression, on peut utiliser la pompe pour mettre en dépression l'intérieur 105 de la chambre 100, et/ou l'élasticité du matériau formant le tube 100, par exemple à la façon bien connue des joints gonflables.

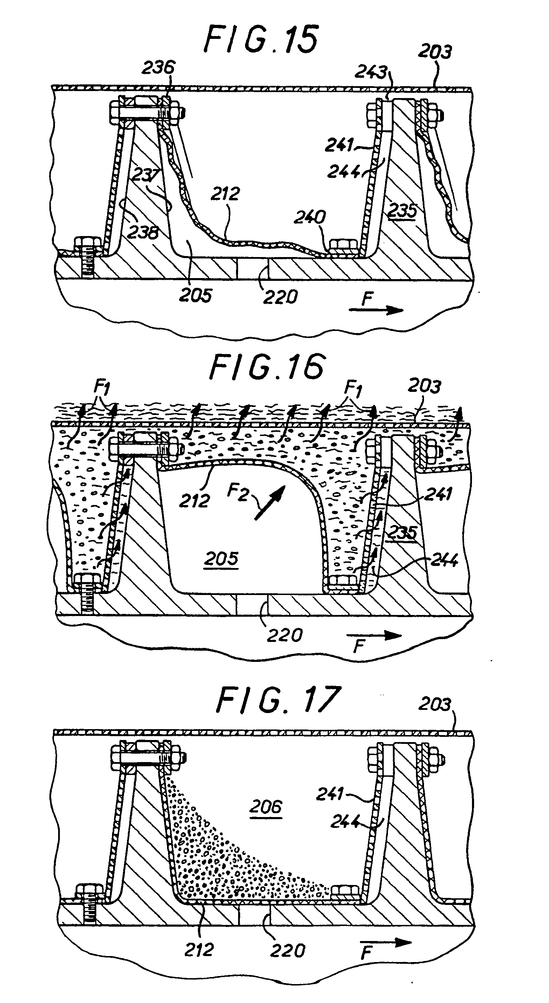

Les figures 15 à 17 montrent une forme de réalisation mettant en oeuvre une membrane en matériau toilé sur toute sa surface.

Cette variante se distingue également par la présence d'une grille supplémentaire 241. On fait ici jouer des rôles différents aux deux faces 237 et 238 du profil du filet hélicoïdal 235 de la vis, situés respectivement en aval et en amont par rapport au sens normal de progression de la matière, indiqué par la flèche F, et que l'on nommera respectivement, face amont 238 et face aval 237. La grille 241 est donc disposée en regard de la face dite amont 238, formant un nouvel espace d'écoulement 244 pour recueillir les jus évacués par une ouverture 243 à la périphérie du filet. La membrane 212 est fixée par des moyens semblables à ceux décrits dans la variante précédente (Fig. 12), mais un des bords est maintenant fixé dans le fond du plein du filet 245 au pied de la grille 241 par un méplat 240, tandis que l'autre bord reste fixé au sommet du filet sur la face dite aval 237 par un méplat 236..

Le méplat 236 permet également la fixation de la grille 241 sur la face dite amont 238 du filet.

On notera que des orifices 220 mettent en communication l'espace confiné à l'intérieur de la vis par la membrane, avec pompe pour établir une pression ou une dépression .

En situation de dépression dans la chambre 205 (fig. 15 et 17), la membrane épouse le fond du filet 245 et la face dite aval 237 du filet.

En situation de pression dans la chambre 205, la membrane 212, en se déployant provoque l'écrasement des graines selon une direction non plus simplement radiale mais ayant une composante axiale (selon la flèche F2) favorisant ainsi l'écoulement des jus à travers la cage 203 et la grille 241 (selon les flèches F1).

Le cheminement des jus n'est plus orienté dans la seule direction d'écrasement des graines, ce qui pouvait se produire dans le cas des variantes précédentes où le pressage était pratiquement radial comme l'écoulement des jus.

Une fois le pressage effectué, lorsque la chambre 205 est mise en dépression (fig 17), l'espace 206 dégagé favorise l'émiettement du produit par le déplacement de la vis (flèche F). La grille 241 est décolmatée ainsi lorsque le produit change de face d'appui du filet.

Cette variante permet non seulement d'obtenir un meilleur pressage du produit, mais aussi une plus grande surface d'égouttage, par la présence de la grille supplémentaire 241.

De plus, la membrane, en matériau toilé sur toute sa surface, ne subira pas de déformations dues aux dilatations concentriques qui pouvaient se produire avec une membrane type caoutchouc.

L'appareil selon l'invention permet de traiter les produits les plus divers, qu'ils soient sous forme pratiquement liquide ou pratiquement solide.

En particulier, l'appareil peut être utilisé dans la préparation de produits alimentaires à partir de produits agricoles, par exemple pour extraire du jus de raisin dans la préparation du vin ; ou bien comme filtre auto-nettoyant, par exemple pour traiter des eaux usées, boues ou lisiers.

Bien entendu, l'invention ne se limite pas aux exemples de réalisation décrits et représentés, mais englobe au contraire toutes les variantes que l'homme du métier pourra déterminer. Ainsi l'appareil selon l'invention peut être vertical, horizontal ou incliné d'un angle donné ou réglable.

**Revendications**

1) Appareil de pressurage pour séparer un produit en des phases liquide et solide, comportant, autour d'un axe tubulaire perforé, un élément hélicoïdal de transport entouré d'une cage perforée, une membrane disposée de façon à diviser l'espace situé entre l'axe tubulaire et la cage, d'une part, en une chambre de pression en regard de l'axe tubulaire et, d'autre part, en une chambre de pressurage en regard de la cage, ladite chambre de pression étant reliée à un moyen adapté à commander la pression dans cette chambre de pression, ledit appareil comportant également des moyens d'entraînement en rotation, caractérisé en ce que lesdits moyens d'entraînement en rotation sont adaptés à entraîner dans le même sens ladite cage d'une part et ledit moyen de transport d'autre part à des vitesses en rotation soit égales, soit différentes.

2) Appareil de pressurage selon la revendication 1, caractérisé en ce que l'on établit dans la chambre de pression une pression positive lorsque les vitesses de rotation de la cage et de l'élément de transport sont égales.

3) Appareil de pressurage selon la revendication 1, caractérisé en ce que l'on établit dans la chambre de pression une pression négative ou nulle lorsque les vitesses de rotation de la cage et de l'élément de transport sont différentes.

4) Appareil de pressurage selon l'une quelconque des revendications 1 à 3, caractérisé en ce qu'il comporte des moyens (222) pour fonctionner suivant une séquence répétitive avec, en alternance, une étape dans laquelle les vitesses de rotation de la cage et de l'élément de transport sont différentes et une étape dans laquelle elles sont égales.

5) Appareil de pressurage selon l'une quelconque des revendications 1 à 4, caractérisé en ce qu'il est divisé en deux parties comprenant respectivement la cage perforée, d'une part, et l'élément de transport hélicoïdal, d'autre part, ces deux parties étant adaptées à se séparer l'une de l'autre par un moyen de dissociation par déplacement relatif en sens axial.

6) Appareil de pressurage selon l'une quelconque des revendications 1 à 4, caractérisé en ce que, à l'intérieur de l'axe tubulaire perforé est aménagé un conduit (16), relié d'un côté à un organe d'admission (17) du produit dans l'appareil et de l'autre à un organe (18) de déversement du produit à l'extrémité amont de l'élément hélicoïdal de transport.

7) Appareil de pressurage selon la revendication 6, caractérisé en ce que la membrane s'étend le long de l'élément de transport hélicoïdal en aval de l'organe (18) de déversement du produit.

8) Appareil de pressurage selon la revendication 1, caractérisé en ce que ledit élément de transport hélicoïdal est une vis sans fin formée sur ledit axe tubulaire perforé, la membrane étant solidaire de la vis sans fin.

9) Appareil de pressurage selon la revendication 8, caractérisé en ce que ladite membrane est en matériau élastique avec des zones marginales toilées.

10) Appareil de pressurage selon la revendication 8, caractérisé en ce que ladite membrane est en matériau toilé sur toute sa surface.

11) Appareil de pressurage selon la revendication 8, caractérisé en ce que ladite membrane (104) fait partie d'un tube (100) rapporté au fond du filet de la vis (101).

12) Appareil de pressurage selon la revendication 11, caractérisé en ce que, en section, la portion (102) par laquelle ledit tube (100) est rapporté sur le plein du filet a une forme en U et une longueur égale à la moitié du périmètre du tube (100), ce périmètre correspondant à la longueur qu'a en section le pourtour du creux de la vis.

13) Appareil de pressurage selon la revendication 8, caractérisé en ce que les bords de la membrane sont enserrés de façon étanche entre le plein du filet (135) et une bande périphérique supérieure (141) d'une part et une bande périphérique inférieure (142) d'autre part.

14) Appareil de pressurage selon la revendication 13, caractérisé en ce que chacune des extrémités de la membrane est fixée de son côté au moyen d'un étrier (143) avec un tronçon central boulonné sur le plein du filet et deux branches verticales qui viennent rejoindre les bandes (141, 142) de fixation des bords.

15) Appareil de pressurage selon la revendication 8, caractérisé en ce que la membrane comporte des bourrelets latéraux (52) et transversaux (52 et 53) solidaires de ladite membrane.

16) Appareil de pressurage selon la revendication 15, caractérisé en ce que ladite membrane est à son départ plaquée, contre le fond du filet de la vis par un dispositif de fixation transversal (45).

17) Appareil de pressurage selon la revendication 15, caractérisé en ce que ladite membrane est fixée à mi-hauteur le long du filet en dehors de la zone extrémale par un dispositif de fixation (39 et 48) desdits bourrelets (52).

18) Appareil de pressurage selon la revendication 9, caractérisé en ce qu'un des bords de la membrane est fixé dans le fond du plein du filet tandis que l'autre bord est fixé au sommet du filet sur une face dite aval (237).

19) Appareil de pressurage selon la revendication 18, caractérisé par la disposition d'une grille (241) en regard de la face amont (238) du filet.

20) Appareil de pressurage selon la revendication 1, caractérisé en ce que ledit élément de transport hélicoïdal entourant ledit axe tubulaire perforé est un filet hélicoïdal (35'), solidaire de la cage perforée.

21) Appareil de pressurage selon l'une quelconque des revendications précédentes, caractérisé en ce qu'il est muni d'un carter de réception des jus (14,14') solidaire de la cage perforée (13,13').

22) Appareil de pressurage selon la revendication 21, caractérisé en ce que ledit carter de réception (14,14') a une forme tronconique évasée en direction d'un moyen de réception des jus (25,25').

23) Appareil de pressurage selon la revendication 21 ou 22, caractérisé en ce que le moyen de réception des jus est une chambre (25, 25') associée à un orifice annulaire (29, 29') ménagé dans un plateau (23,23') supportant ledit carter de réception des jus (14,14').

24) Appareil de pressurage selon la revendication 23, caractérisé en ce que le moyen de réception des jus est muni d'une conduite d'évacuation (27).

25) Appareil de pressurage selon l'une quelconque des revendications précédentes, caractérisé en ce que ladite cage perforée est munie de perforations dont la largeur est inférieure à celle des particules de produit à traiter, à retenir.

26) Appareil de pressurage selon la revendication 25, caractérisé en ce que la largeur des perforations est de l'ordre de quelques dizaines de microns et la longueur de ces perforations est de l'ordre de 0,01m.

27) Appareil de pressurage selon la revendication 5, caractérisé en ce que chacune desdites parties comporte son moteur d'entraînement.

28) Appareil de pressurage selon la revendication 5, caractérisé en ce que les moyens d'entraînement comportent un moteur unique et un moyen de déphasage angulaire entre ce moteur et l'une desdites parties.

FIG.1

FIG.2

FIG.3

FIG.4

FIG.5

FIG.6

FIG.7

12

FIG. 8

FIG.9

EP 0 444 976 A1

FIG. 10

222
M ~207
P ~221
223

FIG. 11

Y
110
122
117
163
154
111
112
134
120
120
120
116
120
115
113
135
120
118
127
123
M
M
P

FIG. 12

135
116
111
112
134
141
142
143
118

FIG. 13

101
103
100
106
104
102

FIG. 14

101
103
104
105
102
100

14

FIG.15

FIG.16

FIG.17

Office européen
des brevets

**RAPPORT DE RECHERCHE EUROPEENNE**

Numéro de la demande

EP 91 40 0173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 097 894 (JOSEF WILLMES GmbH) <br> * Page 2, lignes 10-19; page 6, lignes 1-22; page 15, lignes 8-9 * <br> --- | 1,2,3,4,6,7 | B 01 D 29/11 <br> B 01 D 29/64 <br> B 01 D 33/11 <br> B 01 D 33/46 <br> B 01 D 29/82 <br> B 30 B 9/12 <br> B 30 B 9/22 <br> B 01 D 33/64 |
| A | DE-A-3 434 720 (JOSEF WILLMES GmbH) <br> * Page 7, lignes 23-33 * <br> --- | 1,8,13,16,17 | |
| A | US-A-3 624 729 (M.W. HOOVER) <br> * Colonne 3, lignes 8-46 * <br> ----- | 1 | |

**DOMAINES TECHNIQUES RECHERCHES (Int. Cl.5)**

B 01 D
B 30 B

Le présent rapport a été établi pour toutes les revendications

| Lieu de la recherche | Date d'achèvement de la recherche | Examinateur |
|---|---|---|
| · LA HAYE | 21-03-1991 | KERRES P.M.G. |

EPO FORM 1503 03.82 (P0402)

16